# EUROPEAN PATENT APPLICATION

(11) **EP 2 218 345 A1**
(43) Date of publication of application: **18.08.2010**
(21) Application number: 10000077.7
(22) Date of filing: 07.08.2006
(51) Int. Cl.: A41D 13/12

(54) **Medical treatment garment**

(30) Priority: 13.08.2005 GB 0516663
(62) Divisional of application: 06765228.9
(71) Applicant: Medlock Medical Limited, Oldham OL1 3HS (GB)
(72) Inventor: Leeming, Ray, Shaw Oldham OL2 7AR (GB)
(74) Representative: Wilson Gunn

(57) **Abstract**

A medical treatment garment, of use in treatment of skin conditions such as dermation, eczema or inflammation, comprises an inner layer 20 and an outer layer 21 which are formed together e.g. by knitting and joined by a seam 22. The inner layer 20 is made from yarns etc of a relatively water absorbency, such as cotton or viscose yarns or fibres and the outer layer 21 is made from yarns with a low water absorbency e.g. synthetic yarns such as polyester or polyamide. The garments may be made up from tubular knitted double fabric into tops and trousers, for example.

## Description

This invention relates to a medical treatment garment, in particular to an improved wet wrapping garment for use, for example, in the treatment of atopic eczema, or other skin disorders.

In the treatment of skin disorders, especially atopic eczema, the wet wrapping technique involves the patient (usually, but not exclusively a child) wearing an inner water-soaked or dampened garment. The garment lessens the effects of persistent scratching, protects emollients applied to the skin from being rubbed off, and following water impregnation, cools the skin surface and thereby reduces inflammation and irritation, reducing scratching and promoting sound rest.

The inner and outer garments are made of the same material, usually viscose or bleached cotton, and it is often found that the water is not retained by the inner garment, but instead wicks through the outer garment. This causes dampening of over-clothing and/or bedding, to the discomfort, and possible embarrassment, of the patient. More importantly reducing the water content of the inner garment reduces the effectiveness of the treatment.

The present invention seeks to provide a medical treatment garment especially for use as a wet wrapping garment for treatment of skin disorders such as atopic eczema, which serves to substantially prevent or delay the escape of water from the inner layer of the garment and helping to maintain a moist environment.

According to the present invention there is provided a garment comprising a first inner layer, woven or knitted from one or more first materials, and a second outer layer, woven or knitted from one or more second materials, **characterized in that** the first layer has a higher water absorbency than the second layer. Tests have proven that the garments of the invention significantly slow down the evaporation of water from the inner garment layer, when compared to the inner garment of the twin garment arrangements of the prior art.

The one-piece, twin layer, garments of the invention can be made to be lighter than the double garment application of the prior art, depending on the type(s) of fibres used and the level of garment durability required. The garments of the invention are also more cost-effective to produce and easier to put on and remove, being one garment and not two.

The inner layer and outer layer are preferably interconnected over the smallest possible area so as to reduce potential wicking from the inner to the outer layer. It has been found that laminates bonded over their entire area would not be suitable without an expensive intermediate waterproof layer. Ideally the area over which the-two layers are permanently interconnected is less than 5%, and ideally less than 1%, of the area of the outer layer. The two layers are thus separate, resulting in slowing down the moisture evaporation level from the high absorbency inner layer.

Preferably the first material has a water absorption (%) @ Regain 65% RH 20 Degrees Celsius up to 12 and the similarly measured water absorption for the second material is less than 1 (based on data by J.E.Ford in Physical Properties of Textile Fibres by W.E.Morton and J.W.S.Hearle)

The tubular fabric may be formed by continuously knitting a continuous tube consisting of a zone of first material connected by a knitted seam to a zone of a second material. One zone is folded about the seam, leaving an inner zone of said first material and an outer zone of said second material.

The first material may comprise yarns containing a high proportion of water retentive fibres, such as natural and or regenerated fibres, for example viscose and/or cotton which are water absorbent, and/or highly fibrillated fibres which retain water by capillary attraction, and may be loosely knit.

The second material may comprise generally water-repellant synthetic fibres or filaments, such as polyester and/or polyamide, for example NYLON (trade mark). Ideally these are provided in a tight knit with small loops which give such low porosity values. The use of synthetic fibre for the second layer further makes the garment more durable.

The second zones comprising the second material may additionally be provided with a waterproofing coating.

The inner layer may comprise antibacterial yarns.

One layer may be coloured, patterned or carry a picture, writing and/or logo so as to easily distinguish the outer layer from the inner layer.

As stated previously, a length of fabric comprising a first zone and a second zone, is folded about the junction between the zones so that the first zone forms an internal layer and the second zone forms an external layer of a double layered fabric. The lengths may then be made up into garments, with relatively large diameter lengths of fabric tube being used to form the body or torso parts of garments, and smaller diameter tubes used for legs or arms of the garment. Apertures are included, where required for body parts. Sewn seams connect the sleeves to the body on the vest and down the inside of the pant leggings. These essential attachments and closure points are preferably the only areas where the inner and outer layers permanently connect.

The garments formed are double layer stretchable garments adapted to fit a range of sizes due to being of stretchable, preferably knitted, fabric and are suitable for use in wet warp treatment methods for eczema and the like skin disorders.

The outer layer may be fashioned to provide "air holes" for evaporation of excess moisture.

The tubular fabric may be knitted by double-skin knitting (two layers being knitted concurrently one within the other, and jointed at the beginning and end of the tube) on a circular knitting machine using different yarns for the inner and outer layers. The yarn for the inner layer (first material) may be a high moisture absorbency yarn such as cotton or viscose rayon, whilst that for the outer layer may be a low absorbency synthetic yarn such as polyester. Alternatively the fabric may be made on a warp or flat bed knitting machine. As a further alternative one or more layers of the garment may be woven. In another alternative, a partially or completely seamless garment may be produced using a single or double v-bed flat knitting machine.

The garments may be made up into the form for example of vests or T-shirts and trousers, which may be sleeved or sleeveless, and with varied leg length or sleeve length depending on the affected areas of the body and/or limbs.

In order that the present invention may be more readily understood a specific embodiment thereof will now be described by way of example only with reference to the accompanying drawing in which:-
Figure 1 is a general view of a medical treatment garment according to the invention; and
Figure 2 is a diagrammatic fragmentary cross-section of part of the garment.

A garment 10 according to the invention comprises a top garment for wear over the upper torso and arms of a patient, and comprises a trunk part 11, and arms 12. The arms 12 are attached to the trunk part 11 by seams 13, and the shoulders of the trunk part 11 are formed by a particle seam 14 which leaves a neck aperture 15. The trunk part 11 is made up from a length of tubular knit fabric, of a larger diameter and the arms 12 are made up from lengths of smaller diameter knit fabric.

It is envisaged that similar trousers, comprising a lower trunk part and legs made up from pieces of tubular knit fabric would be provided separately or as part of a garment set.

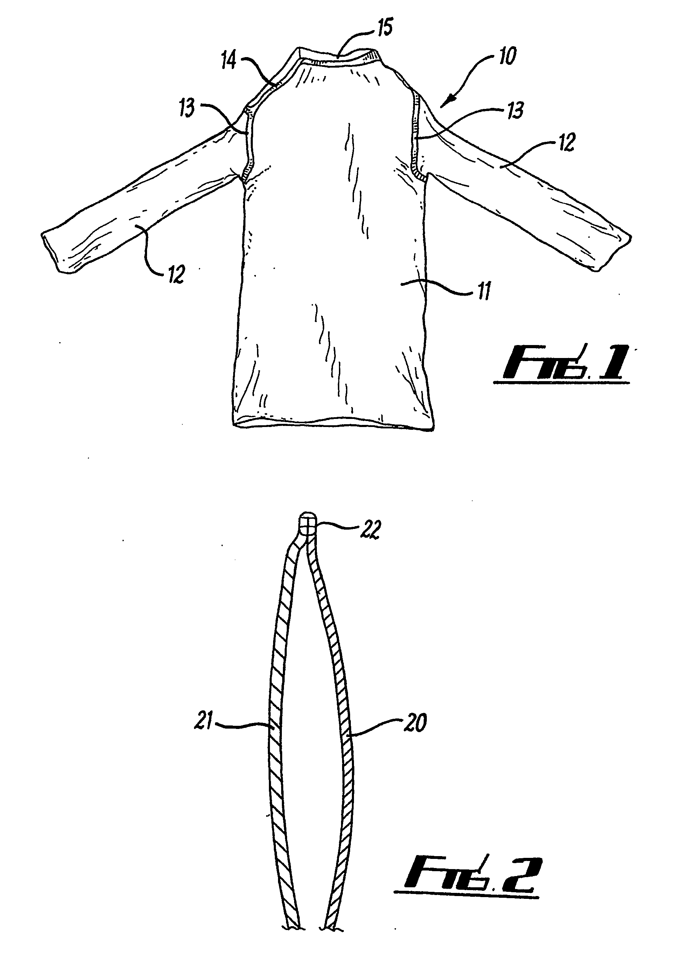

In accordance with the invention, the tubular fabric pieces forming the trunk part and the arm parts are each formed as a double layered knitted fabric, i.e. comprising an inner fabric 20 and an outer fabric 21, as shown in Figure 2.

The fabrics are knitted as one, joined at a knitted seam 22. One fabric is then folded within the other to form a double tube, from different yarn stocks. The inner fabric 20 is knitted from a yarn having a relatively high water retention capability such as cotton or viscose rayon, whilst the outer fabric 21 is knitted from a yarn which is less absorbent, such as a polyester or polyamide yarns

The knitted fabric tubes, having an inner high water absorbency and an outer low water permeability layer, are produced, which are then made up into garments.

The garment is used by first treating the patient's skin with emollient cream or lotion, then soaking the garment with water, and dressing the patient in the garment with the inner layer 20 against the skin, and the outer layer 21 exposed.

Because of the high absorbency of the inner fabric layer, and the low permeability of the outer fabric layer, water is retained against the patient's skin for longer then by known wet treatment garments, and wetting of bedding or outer clothing is reduced. This helps keep the skin cool, and thus reduces irritation and thus scratching, so that the complications which can be caused thereby are reduced in occurrence and severity. Air holes may be provided in the outer layer to allow evaporation of excess moisture.

The garment may be made on a warp or flat bed knitting machine or a single or double v-bed flat knitting machine.

The above described embodiment is by way of illustration only. Many modifications and variations are possible. Variations may be made to the medical garment, to the fabric structure thereof, particularly on the type of knit and the choice of yarns, and the design of the garments themselves may be varied as appropriate to such different wearers, or cover specific affected parts of the body or limbs.

## Claims

1. A medical treatment garment comprising a first inner layer (20), woven or knitted from one or more first materials, and a second, outer layer (21) woven or knitted from one or more second materials, **characterized in that** the first layer has a higher water absorbency that the second layer, and that the first and second layers are connected at a fold.

2. A garment according to claim 1, wherein the inner layer (20) and outer layer 21 are continuously knitted or woven and connected by a seam (22).

3. A garment according to claim 2, wherein the inner layer (20) and the outer layer 21 comprise a tubular fabric which is formed by continuously knitting a continuous tube comprising a first zone of said first material and a second zone of said second material, the seam (22) between the zones comprising a knitted seam..

4. A garment according to any preceding claim wherein said first material has a water absorption (%) @ Regain 65% RH20°C, up to 12, and the similarly measured water absorption of the second material is less than 1.

5. A garment according to any preceding claim wherein the first material comprises yarns containing a high proportion of water retentive fibres, and wherein said water retentive fibres optionally comprise natural or regenerated fibres or highly fibrillated fibres.

6. A garment according to any preceding claim, wherein the second material comprises generally water repellant synthetic fibres or filaments, and wherein the water-repellant fibres or filaments optionally comprise polyester and/or polyamide fibres or filaments or wherein the second material is optionally knitted in a tight knit with small loops.

7. A garment according to any preceding claim, wherein the second material is provided with a waterproofing coating.

8. A garment according to any preceding claim wherein the first material comprises antibacterial yarns.

9. A garment according to any preceding claim, which is formed from a length of fabric comprising a first zone and a second zone which is folded about the junction between the zones, so that the first zone forms an internal layer and the second zone forms an external layer of a double layered fabric.

10. A garment according to any preceding claim made from a tubular fabric knitted by double-skin knitting on a circular knitting machine using different yarns for the inner and outer layers.

11. A garment according to any preceding claim wherein the outer layer is fashioned to allow air holes for evaporation of excess moisture.

12. A garment according to any preceding claim which is made on a warp or flat bed knitting machine.

13. A garment according to claim 1 wherein one or more layers of the garment are woven.

14. A garment according to any preceding claim made up into vests or t-shirts and trousers.

15. A partially or completely seamless garment according to any preceding claim produced using a single or double v-bed flat knitting machine.
